# EUROPÄISCHE PATENTANMELDUNG

(11) **EP 1 988 272 A1**
(43) Veröffentlichungstag der Anmeldung: **05.11.2008**
(21) Anmeldenummer: 08007170.7
(22) Anmeldetag: 11.04.2008
(51) Int. Cl.: F02D 19/06, F02D 19/08, F02D 41/00

(54) **Verfahren zum Betreiben einer Brennkraftmaschine die mit mehreren Kraftstoffen betrieben wird**

(30) Priorität: 03.05.2007 DE 102007020702
(71) Anmelder: Volkswagen Aktiengesellschaft, 38436 Wolfsburg (DE)
(72) Erfinder: Schweizer, Marc-Jochen, 77855 Achern-Önsbach (DE); Ebus, Feitse, 38108 Braunschweig (DE)

(57) **Zusammenfassung**

Die Erfindung betrifft ein Verfahren zum Betreiben einer Brennkraftmaschine, insbesondere Ottomotor oder Dieselmotor, insbesondere eines Kraftfahrzeuges, wobei die Brennkraftmaschine wahlweise ausschließlich entweder mit einem ersten Kraftstofftyp oder einem zweiten Kraftstofftyp betrieben wird. Hierbei wird während des Betriebs der Brennkraftmaschine ausschließlich mit dem zweiten Kraftstofftyp nach einer vorbestimmtem ersten Anzahl von Umdrehungen der Brennkraftmaschine für eine vorbestimmte zweite Anzahl von Umdrehungen der Brennkraftmaschine auf den Betrieb ausschließlich oder zusätzlich mit dem ersten Kraftstoff und anschließend wieder zurück in den Betrieb der Brennkraftmaschine ausschließlich mit dem zweiten Kraftstoff umgeschaltet.

## Beschreibung

Die Erfindung betrifft ein Verfahren zum Betreiben einer Brennkraftmaschine, insbesondere Ottomotor oder Dieselmotor, insbesondere eines Kraftfahrzeuges, wobei die Brennkraftmaschine wahlweise ausschließlich entweder mit einem ersten Kraftstofftyp oder einem zweiten Kraftstofftyp betrieben wird, gemäß dem Oberbegriff des Patentanspruchs 1.

Aus der DE 694 05 400 T2 ist ein System und ein Verfahren zur Brennstoffzumessung zu einer mit verschiedenen Brennstoffen arbeitenden Brennkraftmaschine bekannt. Zum Betrieb von Ottomotoren nicht nur mit Ottokraftstoff sondern zusätzlich oder gleichzeitig mit beispielsweise LPG (Liquified Petroleum Gas), CNG (Compressed Natural Gas) oder auch Ethanol-Benzin-Mischungen bzw. mit einem Ethanol-Anteil von größer 50% (E>50%) als Kraftstoff sind zusätzliche Einspritz- bzw. Einblase-Ventile zur Einbringung von LPG in ein Saugrohr der Brennkraftmaschine vorgesehen. Ein Problem ist hierbei ein erhöhter Verschleiß der Gaswechselventile sowie der Ventilsitze für diese bei reinem LPG-Betrieb über einen längeren Zeitraum. Übermäßiger Ventilsitzverschleiß kann zu Undichtigkeiten und damit zu Motorlauf-Problemen führen. Im schlimmsten Fall kann es auch zu einem Motorschaden kommen. Das Problem lässt sich beispielsweise durch den Einsatz spezieller Ventilsitzwerkstoffe lösen. Dies ist jedoch kostenintensiv.

Weiterhin ist es heute auch üblich geworden, Ottomotoren nachträglich auf den zusätzlichen Betrieb mit beispielsweise LPG (Liquified Petroleum Gas), CNG (Compressed Natural Gas) oder auch Ethanol-Benzin-Mischungen umzurüsten. Eine Umrüstung der Sitzringe ist zwar technisch möglich, wäre aber in aller Regel zu teuer und aufwendig.

Der Erfindung liegt die Aufgabe zugrunde, auf einfache und kostengünstige Art den Betrieb von Ottomotoren mit alternativen Kraftstoffen zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass während des Betriebs der Brennkraftmaschine ausschließlich mit dem zweiten Kraftstofftyp nach einer vorbestimmtem ersten Anzahl von Umdrehungen der Brennkraftmaschine für eine vorbestimmte zweite Anzahl von Umdrehungen der Brennkraftmaschine auf den Betrieb ausschließlich oder zusätzlich mit dem ersten Kraftstoff und anschließend wieder zurück in den Betrieb der Brennkraftmaschine ausschließlich mit dem zweiten Kraftstoff umgeschaltet wird.

Dies hat den Vorteil, dass ein Verschleiß von Gaswechselventilen und entsprechenden Ventilsitzen für diese reduziert ist.

Der erste Kraftstofftyp ist beispielsweise ein Ottokraftstoff, insbesondere Benzin, oder ein Dieselkraftstoff und der zweite Kraftstofftyp umfasst beispielsweise Ethanol, Methanol oder ein Gas, insbesondere CNG (Compressed Natural Gas), LPG (Liquified Petroleum Gas), Biogas oder Wasserstoff, oder eine Mischung von zwei oder mehr der vorgenannten Kraftstofftypen.

In einer bevorzugten Ausführungsform beträgt die vorbestimmte erste Anzahl von Umdrehungen der Brennkraftmaschine 50 bis 500, insbesondere 50 bis 200, insbesondere 100, und die vorbestimmte zweite Anzahl von Umdrehungen der Brennkraftmaschine 1 bis 100, insbesondere 5 bis 25, insbesondere 10.

Um erhöhter Belastung der Gaswechselventil und deren Ventilsitze bei verschiedenen Betriebszuständen der Brennkraftmaschine Rechnung zu tragen, wird die vorbestimmte zweite Anzahl von Umdrehungen der Brennkraftmaschine in Abhängigkeit von einem Betriebszustand Brennkraftmaschine, wie beispielsweise der der Last und/oder der Drehzahl der Brennkraftmaschine, variiert.

Zweckmäßigerweise erfolgt die Umschaltung auf den Betrieb mit dem ersten Kraftstoff für die vorbestimmte zweite Anzahl von Umdrehungen der Brennkraftmaschine nur dann, wenn wenigstens eine vorbestimmte Bedingung für wenigstens einen Betriebsparameter erfüllt ist.

In einer bevorzugten Ausführungsform umfasst der wenigstens eine Betriebsparameter eine Drehzahl der Brennkraftmaschine. Das Mischungsverhältnis wird in Abhängigkeit von der Drehzahl eingestellt.

Eine besonders gute Verschleißminderung erzielt man dadurch, dass die vorbestimmte erste und/oder zweite Anzahl von Umdrehungen der Brennkraftmaschine derart gewählt wird, dass der Anteil des ersten Kraftstoffes am insgesamt der Brennkraftmaschine zugeführten Kraftstoff bezogen auf eine Anzahl von Umdrehungen der Brennkraftmaschine, welche einer Summe von erster und zweiter Anzahl von Umdrehungen der Brennkraftmaschine entspricht, 1 % bis 75 %, insbesondere 5 %, insbesondere 25%, insbesondere 15 %, beträgt.

In einer bevorzugten Ausführungsform wird die vorbestimmte erste und/oder zweite Anzahl von Umdrehungen der Brennkraftmaschine derart gewählt, dass bei einer ersten Drehzahl der Brennkraftmaschine der Anteil des ersten Kraftstoffes am insgesamt der Brennkraftmaschine zugeführten Kraftstoff bezogen auf eine Anzahl von Umdrehungen der Brennkraftmaschine, welche einer Summe von erster und zweiter Anzahl von Umdrehungen der Brennkraftmaschine entspricht, 1 % bis 10 %, insbesondere 5 %, entspricht und dass mit steigender Drehzahl erste und/oder zweite Anzahl von Umdrehungen der Brennkraftmaschine derart variiert werden, dass bei einer zweiten Drehzahl, welche höher als die erste Drehzahl ist, der Anteil des ersten Kraftstoffes bis auf 10 % bis 20 %, insbesondere 15 %, beispielsweise linear oder logarithmisch ansteigt. Die erste Drehzahl hat beispielsweise einen Wert im Bereich von 500 U/min (Leerlauf) bis 4.000 U/min, insbesondere 3.000 U/min. Die zweite Drehzahl hat beispielsweise einen Wert im Bereich von 5.000 U/min bis 7.000 U/min, insbesondere von 6.000 U/min.

Alternativ wird die vorbestimmte erste und/oder zweite Anzahl von Umdrehungen der Brennkraftmaschine derart gewählt, dass der Wert der zweiten Anzahl 1 % bis 20 %, insbesondere 5 %, insbesondere 15 %, des Wertes der ersten Anzahl beträgt.

In einer alternativen bevorzugten Ausführungsform wird die vorbestimmte erste und/oder zweite Anzahl von Umdrehungen der Brennkraftmaschine derart gewählt, dass bei einer ersten Drehzahl der Brennkraftmaschine, welche beispielsweise im Bereich von 500 U/min bis 4.000 U/min, insbesondere 3.000 U/min, liegt, der Wert der zweiten Anzahl 1 % bis 10 %, insbesondere 5 %, des Wertes der ersten Anzahl beträgt und dass mit steigender Drehzahl erste und/oder zweite Anzahl von Umdrehungen der Brennkraftmaschine derart variiert werden, dass bei einer zweiten Drehzahl, welche höher als die erste Drehzahl ist sowie beispielsweise im Bereich von 5.000 U/min bis 7.000 U/min, insbesondere von 6.000 U/min, liegt, der Wert der zweiten Anzahl bis auf 10 % bis 20 %, insbesondere 15 %, des Wertes der ersten Anzahl linear oder logarithmisch ansteigt.

Die Erfindung wird im Folgenden näher am Beispiel einer Brennkraftmaschine in Form eines Ottomotors erläutert, welcher wahlweise mit Otto-Normalkraftstoff (Benzin) und LPG (Liquified Petroleum Gas), nachfolgend auch als "Sonderkraftstoff" bezeichnet, betrieben werden kann.

Durch abwechselndes Einspritzen von Benzin und LPG lässt sich ein Verschleiß an den Gaswechselventilen und den Ventilsitzen für diese reduzieren bzw. der Ventilverschleiß kann über die Motor-Lebensdauer auf ein erträgliches Maß gesenkt werden. Das erfolgt beispielsweise derart, dass im Betrieb der Brennkraftmaschine mit LPG über 100 Motor-Umdrehungen LPG eingespritzt wird und dann über 10 Motor-Umdrehungen die Brennkraftmaschine vorübergehend auf Benzinbetrieb umgestellt wird. Die Steuerung dieses Ablaufes erfolgt über eine übliche Motorsteuerung bzw. auch über üblicherweise zusätzlich eingesetzte LPG-Zusatz-Steuergeräte.

Besonders bevorzugt ist folgendes Vorgehen:
1. Abwechselnde Einbringung von Sonderkraftstoff (LPG, CNG, oder E>50%) und Otto-Normkraftstoff (Benzin) in den Brennraum der Brennkraftmaschine in Abhängigkeit von Motor-Drehzahl und Motorlast.
2. Mit steigender Drehzahl bis zur Nenndrehzahl steigt der Anteil des Otto-Normkraftstoffes linear an, d.h. bei 3000 U/min beispielsweise 5%-Anteil Benzin und bei 6.000 U/min 15%-Anteil Benzin.
3. Einsteuerung des Ottokraftstoffes im Mischbetrieb in einem Fenster von 50-500 Umdrehungen bzw. Zyklen, d.h. beispielsweise bei 5%-Benzin-Anteil abwechselnd 5-25 Zyklen Benzin und 50-500 Zyklen Sonderkraftstoff.

## Patentansprüche

1. Verfahren zum Betreiben einer Brennkraftmaschine, insbesondere Ottomotor oder Dieselmotor, insbesondere eines Kraftfahrzeuges, wobei die Brennkraftmaschine wahlweise ausschließlich entweder mit einem ersten Kraftstofftyp oder einem zweiten Kraftstofftyp betrieben wird, **dadurch gekennzeichnet, dass** während des Betriebs der Brennkraftmaschine ausschließlich mit dem zweiten Kraftstofftyp nach einer vorbestimmtem ersten Anzahl von Umdrehungen der Brennkraftmaschine für eine vorbestimmte zweite Anzahl von Umdrehungen der Brennkraftmaschine auf den Betrieb ausschließlich oder zusätzlich mit dem ersten Kraftstoff und anschließend wieder zurück in den Betrieb der Brennkraftmaschine ausschließlich mit dem zweiten Kraftstoff umgeschaltet wird.

2. Verfahren nach Anspruch 1, **dadurch gekennzeichnet, dass** der zweite Kraftstofftyp Ethanol, Methanol oder ein Gas, insbesondere CNG (Compressed Natural Gas), LPG (Liquified Petroleum Gas), Biogas oder Wasserstoff, oder eine Mischung von zwei oder mehr der vorgenannten Kraftstofftypen umfasst, und/oder dass der erste Kraftstofftyp ein Ottokraftstoff, insbesondere Benzin, oder ein Dieselkraftstoff ist.

3. Verfahren nach wenigstens einem der vorhergehenden Ansprüche, **dadurch gekennzeichnet, dass** die vorbestimmte zweite Anzahl von Umdrehungen der Brennkraftmaschine in Abhängigkeit von einem Betriebszustand der Brennkraftmaschine variiert wird.

4. Verfahren nach Anspruch 3, **dadurch gekennzeichnet, dass** die vorbestimmte zweite Anzahl von Umdrehungen der Brennkraftmaschine in Abhängigkeit von der Last und/oder der Drehzahl der Brennkraftmaschine variiert wird.

5. Verfahren nach wenigstens einem der vorhergehenden Ansprüche, **dadurch gekennzeichnet, dass** die Umschaltung auf den Betrieb mit dem ersten Kraftstoff für die vorbestimmte zweite Anzahl von Umdrehungen der Brennkraftmaschine nur dann erfolgt, wenn wenigstens eine vorbestimmte Bedingung für wenigstens einen Betriebsparameter erfüllt ist.

6. Verfahren nach Anspruch 5, **dadurch gekennzeichnet, dass** der wenigstens eine Betriebsparameter eine Drehzahl der Brennkraftmaschine umfasst.

7. Verfahren nach Anspruch 6, **dadurch gekennzeichnet, dass** ein Mischungsverhältnis wird in Abhängigkeit von der Drehzahl eingestellt wird.

8. Verfahren nach wenigstens einem der vorhergehenden Ansprüche, **dadurch gekennzeichnet, dass** die vorbestimmte erste und/oder zweite Anzahl von Umdrehungen der Brennkraftmaschine derart gewählt wird, dass der Anteil des ersten Kraftstoffes am insgesamt der Brennkraftmaschine zugeführten Kraftstoff bezogen auf eine Anzahl von Umdrehungen der Brennkraftmaschine, welche einer Summe von erster und zweiter Anzahl von Umdrehungen der Brennkraftmaschine entspricht, 1 % bis 75 %, insbesondere 5 %, insbesondere 25%, insbesondere 15 %, beträgt.

9. Verfahren nach wenigstens einem der vorhergehenden Ansprüche, **dadurch gekennzeichnet, dass** die vorbestimmte erste und/oder zweite Anzahl von Umdrehungen der Brennkraftmaschine derart gewählt wird, dass bei einer ersten Drehzahl der Brennkraftmaschine der Anteil des ersten Kraftstoffes am insgesamt der Brennkraftmaschine zugeführten Kraftstoff bezogen auf eine Anzahl von Umdrehungen der Brennkraftmaschine, welche einer Summe von erster und zweiter Anzahl von Umdrehungen der Brennkraftmaschine entspricht, 1 % bis 10 %, insbesondere 5 %, entspricht und dass mit steigender Drehzahl erste und/oder zweite Anzahl von Umdrehungen der Brennkraftmaschine derart variiert werden, dass bei einer zweiten Drehzahl, welche höher als die erste Drehzahl ist, der Anteil des ersten Kraftstoffes bis auf 10 % bis 20 %, insbesondere 15 %, ansteigt.

10. Verfahren nach wenigstens einem der Ansprüche 1 bis 6, **dadurch gekennzeichnet, dass** die vorbestimmte erste und/oder zweite Anzahl von Umdrehungen der Brennkraftmaschine derart gewählt wird, dass der Wert der zweiten Anzahl 1 % bis 20 %, insbesondere 5 %, insbesondere 15 %, des Wertes der ersten Anzahl beträgt.

11. Verfahren nach wenigstens einem der Ansprüche 1 bis 6, **dadurch gekennzeichnet, dass** die vorbestimmte erste und/oder zweite Anzahl von Umdrehungen der Brennkraftmaschine derart gewählt wird, dass bei einer ersten Drehzahl der Brennkraftmaschine der Wert der zweiten Anzahl 1 % bis 10 %, insbesondere 5 %, des Wertes der ersten Anzahl beträgt und dass mit steigender Drehzahl erste und/oder zweite Anzahl von Umdrehungen der Brennkraftmaschine derart variiert werden, dass bei einer zweiten Drehzahl, welche höher als die erste Drehzahl ist, der Wert der.zweiten Anzahl bis auf 10 % bis 20 %, insbesondere 15 %, des Wertes der ersten Anzahl ansteigt.

12. Verfahren nach Anspruch nach wenigstens einem der vorhergehenden Ansprüche, **dadurch gekennzeichnet, dass** die erste Drehzahl einen Wert im Bereich von 500 U/min bis 4.000 U/min, insbesondere 3.000 U/min und die zweite Drehzahl einen Wert im Bereich von 5.000 U/min bis 7.000 U/min, insbesondere von 6.000 U/min, hat.
